# EUROPEAN PATENT SPECIFICATION

(11) **EP 4 150 267 B1**
(45) Date of publication and mention of the grant of the patent: **03.09.2025**
(21) Application number: 21725488.7
(22) Date of filing: 11.05.2021
(51) Int. Cl.: F24F 8/108, A47B 13/08, A47B 97/00

(54) **AIR PURIFICATION TABLE**
LUFTREINIGUNGSTISCH
TABLE DE PURIFICATION DE L'AIR

(30) Priority: 11.05.2020 BE 202005320
(43) Date of publication of application: 22.03.2023
(73) Proprietor: Bedking Ergopolis, 3190 Boortmeerbeek (BE)
(72) Inventor: MANNEKENS, Pascal, 3150 Haacht (BE)
(74) Representative: Winger
(86) International application number: PCT/EP2021/062493
(87) International publication number: WO 2021/228861

(56) References cited:
- CN-A- 109 303 417
- CN-Y- 2 902 011
- US-A- 6 152 451

## Description

### Scope of the invention

This invention relates generally to air purification systems. More specifically, it relates to air purification systems that reduce the risk of infections passing between persons.

### Background of the invention

Various air purifiers exist today for improving the air quality in an enclosed space. These air purifiers remove harmful substances, such as particulates, allergens, bacteria or viruses, from the air.

Air purifiers can be based on different filtering principles, such as mechanical filtering, electrostatic filtering, or ionisation. An example of a typically used filter is a HEPA (high-efficiency particulate air) filter.

Good air purification, by refreshing the air and by purifying the air, has a significant effect on health and general wellbeing. Good air purification can, for example, reduce asthma and allergies and can also help to reduce infections (e.g. by reducing the number of bacteria and viruses in the air).

A significant aspect of infections is airborne transmission between people. Through airborne transmission, an infection can pass from one person to another.

US6152451A discloses a known gaming table with ventilation and air purifying means designated to reduce exposition of the dealer to contaminated air and smoke produced by players.

There is therefore still room for a more efficient system for purifying ambient air that also reduces the risk of infections passing from one person to another.

### Summary of the invention

It is an object of embodiments of the present invention to provide a good system for purifying the ambient air.

The aforementioned object is achieved by a table according to claim 1.

In a first aspect, the present invention provides a table adapted to purify ambient air. The table contains a worktop and an air purifier. An opening is present in the worktop. The air purifier is attached to the worktop and the outlet thereof connects with the worktop or protrudes through the opening in the worktop. The air purifier is positioned such that, during the operation of the air purifier, purified air flows through the opening from a first side to a second side of the worktop. The second side of the worktop is provided to be closer to the face of persons present than the first side.

A table according to embodiments of the present invention is configured such that the chance of contamination between persons at the table is reduced when the air purifier is operational and purified air flows from the first side to the second side of the worktop.

It is an advantage of embodiments of the present invention that a flow of filtered air is blown out from the second side of the table.

It is further an advantage of embodiments of the present invention that the risk of airborne transmission between persons at the table is reduced. In airborne transmission, pathogens can be transmitted between persons through coughing, sneezing or breathing. Pathogens may be associated with drops, droplets, droplet nuclei, or particulates, for example.

The risk of airborne transmission is reduced in the present invention by diverting the potentially contaminated aerosol from a person present at the table and diluting the potentially contaminated aerosol with the flow of filtered air.

It is an advantage of embodiments of the present invention that the outlet of the air purifier connects with the worktop or protrudes to the second side of the worktop. This ensures that the airflow from the air purifier is efficiently distributed above the worktop and is not lost below the worktop through an opening between the air purifier and the underside of the worktop.

In a second aspect, the present invention provides a kit of components which, once assembled, result in a table according to the first aspect of the present invention.

Specific and preferred aspects of the invention are included in the attached independent and dependent claims. Features of the dependent claims may be combined with features of the independent claims and with features of other dependent claims as appropriate and not only as explicitly presented in the claims. These and other aspects of the invention will be apparent from and clarified with reference to the embodiment(s) described below.

### Brief description of the figures

FIG. 1 illustrates a schematic drawing of a table not according to the invention
FIG. 2 illustrates a schematic drawing of a table, which contains a container, not according to the invention.
FIG. 3 illustrates a schematic drawing of a table, the outgoing airflow of which is oriented in a direction parallel to the worktop, in accordance with embodiments of the present invention.
FIG. 4 illustrates a schematic drawing of a table, wherein a webbing is used to attach the air purifier to the worktop, not according to the invention.
FIG. 5 illustrates a schematic drawing of a table, wherein a webbing is used to attach the air purifier to a glass worktop, not according to the invention.
FIG. 6 illustrates a schematic drawing of a worktop having a vertical portion, not according to the invention.
FIG. 7 illustrates a schematic drawing of a worktop having a movable air purifier, not according to the invention.
FIG. 8 illustrates a schematic drawing of a worktop having a central leg, which is also a support of the air purifier, not according to the invention.
FIG. 9 illustrates a schematic drawing of an air purifier the outlet of which comprises a tube connecting with a worktop, not according to the invention.
FIG. 10 illustrates a schematic drawing of a top view and a side view of a table having several openings, not according to the invention.
FIG. 11 illustrates a schematic drawing of a top view of a similar table to that shown in FIG. 10 but this time with a circular worktop.
FIG. 12 shows a side section of a worktop with an opening in the worktop wherein slats are present in the opening which can be rotated in order to deviate the airflow.
FIG. 13 shows a top view of a worktop wherein slats are provided which are oriented in the length direction of the opening.
FIG. 14 shows a cross-section of a table with mounted air purifier in accordance with embodiments of the present invention.

The figures are only schematic and not limiting. In the figures, the dimensions of some components may be exaggerated and not to scale for illustrative purposes.

Reference numbers in the claims should not be interpreted as limiting the scope of protection. In the different figures, the same reference numbers refer to the same or similar elements.

### Detailed description of illustrative embodiments

The present invention will be described with reference to particular embodiments and with reference to certain drawings; however, the invention is not limited thereto but is limited only by the claims. The drawings described are only schematic and not limiting. In the drawings, for illustrative purposes, the dimensions of some elements may be enlarged and not drawn to scale. The dimensions and relative dimensions sometimes do not correspond to the actual practical implementation of the invention.

Moreover, the terms "top", "bottom", "rear", "front" and the like in the description and the claims are used for descriptive purposes and not necessarily to describe relative positions. It is to be understood that the terms thus employed may be interchangeable under given circumstances and that the embodiments of the invention described herein are also suitable for operation according to other orientations than those described or shown herein.

It should be noted that the term "contains", as used in the claims, is not to be interpreted as limited to the means described thereafter; this term does not preclude other elements or steps. It is thus to be interpreted as specifying the presence of the indicated features, values, steps or components referred to, but does not preclude the presence or addition of one or more other features, values, steps or components, or groups thereof. Thus, the scope of the expression "a device containing means A and B" should not be limited to devices consisting only of components A and B. Thus, the scope of the expression "a device containing means A and B" should not be limited to devices consisting only of components A and B. It means that with regard to the present invention, A and B are the only relevant components of the device.

Reference throughout this specification to "one embodiment" or "an embodiment" means that a specific feature, structure or characteristic described in connection with the embodiment is included in at least one embodiment of the present invention. Thus, the occurrence of the expressions "in one embodiment" or "in an embodiment" in various places throughout this specification need not necessarily refer to the same embodiment each time, but may do so. Further, the specific features, structures or characteristics may be combined in any suitable manner, as would be apparent to an average skilled person on the basis of this disclosure, in one or more embodiments.

Similarly, it should be appreciated that in the description of exemplary embodiments of the invention, several features of the invention are sometimes grouped together in one single embodiment, figure or description thereof for the purpose of streamlining the disclosure and assisting in the understanding of one or more of the several inventive aspects.

Furthermore, while some of the embodiments described herein contain some, but not other, features included in other embodiments, combinations of features of different embodiments are intended to fall within the scope of the invention, and constitute these different embodiments, as would be understood by the skilled person. For example, in the following claims, any of the described embodiments may be used in any combination.

Numerous specific details are presented in the description provided here. It is to be understood, nevertheless, that embodiments of the invention may be carried out without these specific details. In other cases, well-known methods, structures and techniques have not been shown in detail in order to keep this description clear.

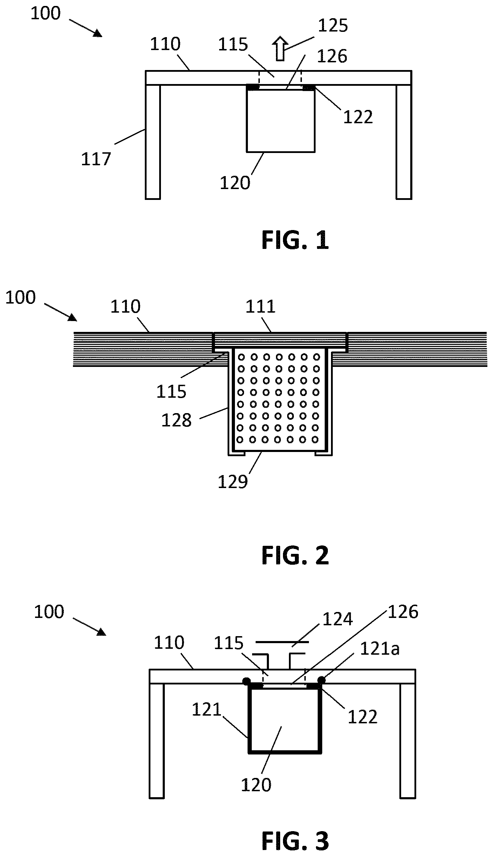

In a first aspect, the present invention provides a table 100 adapted to purify ambient air. An example of such a table is shown in the schematic drawing in FIG. 1. The table 100 contains a worktop 110 containing an opening 115. The table also contains an air purifier 120. The outlet 126 of the air purifier 120 is attached to the worktop 110 and connects with the worktop 110 or protrudes through the opening. The air purifier is mounted such that, during the operation of the air purifier, an airflow 125 of purified air flows from a first side of the worktop to a second side of the worktop. The second side of the worktop is provided to be closer to the face of persons present than the first side. This means that during normal use of the worktop, a person's face is closer to the second side than to the first side. During the operation of the air purifier, the purified air will be distributed on the second side of the worktop 110. In the example of FIG. 1, the second side is the top side of the worktop and the first side is the bottom side of the worktop.

Such a table has the advantage of reducing the risk of persons infecting each other. Although it seems more logical to extract and filter the air that is exhaled by persons, the inventor has conceived the idea of distributing the airflow from the opening on the second side of the worktop. This has the advantage that filtered air is distributing above the table and any contaminated air from a person at the table is diluted and blown away. Although this method is not intuitive, it has significant advantages in terms of reducing the risk of contamination. By integrating the air purifier into the table, it can be positioned close to the persons at the table and even between the persons at the table. It is an advantage of embodiments of the present invention that the concentration of aerosols in the air mass nearby the person(s) at the table can be locally reduced. In embodiments of the present invention the airflow is distributed from the opening on the second side of the worktop towards the persons at the table. This may be done at a reduced flow rate as purified air is directly flowing to the persons at the table.

There can be several openings in a table. The airflow from an air purifier can be shared between these openings or one air purifier can be installed per opening. By installing several openings, an airflow can be present closer to a user, for example. In this way, separate zones with purified air can be created for each user, for example. As the number of openings increases, the flow rate of the airflow per opening may decrease.

In embodiments of the present invention the flow rate may be adjustable. At a reduced flow rate a mass of cleaned air remains close to the table. When increasing the flow rate also higher in the room the concentration of aerosols can be reduced.

In a typical example, the flow rate per opening may for example be 750 m³/h. The flow may be controlled such that the flow of cleaned air is impelled to a height of more than 2, or even more than 3, or even more than 4 meter. In embodiments of the present invention the flow rate may be regulated such that between 0.9 m and 1.8 m the cleanest air is obtained.

Controlling the flow rate may comprise increasing or decreasing the size of the opening, and/or controlling the speed of the one or more fans which generate the air flow. By decreasing the width of the flow the flow rate can be increased. Thus, an air flow is obtained which can reach higher.

In embodiments of the present invention the air stream is a continuous stream. In embodiments of the present invention an air control element may be present which is configured to change the orientation and/or the width and/or the flow rate of the filtered air.

In embodiments of the present invention sensors may be used to provide feedback to a controller which is configured to control the air flow (e.g. orientation and/or width and/or flow rate). For example one or more VOC (Volatile Organic Compound) sensors, and/or CO2 sensors, and/or particulate matter sensors, and/or biomarker sensors (e.g. SARS sensors), and/or temperature sensors and/or humidity sensors may be used. The air flow may be controlled such that one or more of the measured parameters fall within predetermined thresholds.

In embodiments of the present invention controlling the air flow may be done manually (e.g. by manually controlling the speed of the fan(s) which generates the air flow).

Filtering may for example be done such that the concentration of particles of a certain size (e.g. around 10 µm or even around 2.5 µm) or of a size range (e.g. between 2.5 and 15 µm) is reduced to a certain limit. Even particles down to 0.3 µm and even smaller (e.g. 0.1 µm) may be filtered (for example using HEPA filters). This is particularly advantageous for avoiding contamination by viruses because particulate matter can be a carrier for viruses.

Where reference is made in embodiments of the present invention to a table, this may be, for example, a kitchen table, a worktable, a meeting table, a dining table, a coffee table, or any other table at which people may be present.

The table can be designed so that in normal circumstances the worktop is arranged horizontally, but it can also be arranged at a different angle. The worktop can have a first part that is arranged at a different angle than a second part. The first part may for example be arranged horizontally while the second part is vertically oriented.

The worktop can be supported in various ways. For example, it can be supported by one or more table legs, it can also be attached to the wall, for example, or it can be integrated into a piece of furniture. In the example of FIG. 1, the tabletop is supported by table legs 117.

Tables according to embodiments of the present invention can be used in businesses, restaurants, cafes, shops, hospitals, clean rooms or rehabilitation centres. This list is not limiting but serves only as an example.

In some embodiments of the present invention, the table 100 contains a sealing element 122 between the outlet 126 of the air purifier 120 and the worktop 110 in order to provide the connection between the worktop 110 and the air purifier. It is in this case an advantage of embodiments of the present invention that a good connection between the outlet of the worktop and the air purifier can be achieved by means of the sealing element. This prevents the flow of purified air from partially being blown under the table and not going through the opening.

An example of such a sealing element 122 between the outlet 126 of the air purifier 120 and the worktop 110 is shown in FIG. 1. The material chosen for the sealing element can be matched with the material of the worktop in order to provide a good closure. The material of the sealing element may be, for example, rubber, or wood, or glass, or metal, or any other material with which a good closure can be achieved. A good closure can for example be achieved with a rubber sealing ring.

In some embodiments of the present invention, the worktop may be made, for example, of wood, glass, ceramic, plexiglass, natural stone, and so on. It may also be constructed of various materials. For example, it may contain a cardboard tabletop.

In some examples not according to the invention, such as that illustrated in FIG. 1, the airflow is oriented in a direction perpendicular to the worktop 110. An advantage of this is that no person at the table is disturbed by the airflow.

According to the invention, such as those of FIG. 3, the outgoing airflow 124 is oriented in a direction parallel to the worktop 110. In this case, the airflow points in several directions.

According to the present invention, the table contains at least one air orienting element 124 which is adjustable such that the direction of the airflow can be varied. An example of an air orienting element is also shown in FIG. 3.

In embodiments of the present invention, the worktop or the air purifier contains at least one air orienting element which is adjustable such that the direction of the airflow can be adjusted according to the location of the various persons at the table. Different air orienting elements 124 may be present.

The angle between outer opposite boundaries of the air stream may for example be an angle between 20° and 180°, for example between 20° and 150°, for example between 20° and 120°, for example between 20° and 90°, for example between 25° and 45°. The invention is not limited to these ranges. The angle may also vary for different positions around the table. It may for example vary from person to person.

An air orienting element 124 may direct the air in different directions. Thus, different air streams may be obtained.

The angle between the average direction of (one of) the air stream(s) and the table may for example range between 20° and 160°, or for example between 40° and 140°, or for example between 60° and 120°, or for example between 80° and 100°, or for example around 90°.

Preferably the air orienting element is such that the air above the worktop between the different persons at the table is continuously replaced by filtered air. In embodiments of the present invention the air orienting element is configured such that it is bending the filtered air stream in the direction of the persons at the table.

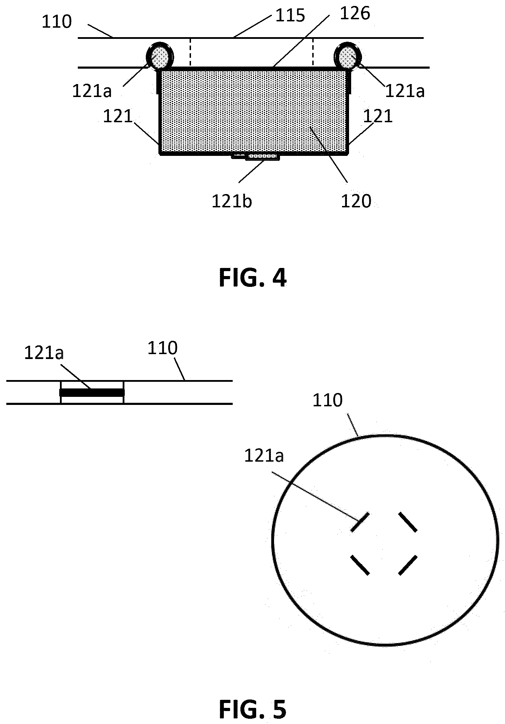

In embodiments of the present invention, the table contains a webbing 121 with which the air purifier is attached to the worktop 110. An example of a webbing 121 is shown in FIG. 3 and FIG. 4. The webbing is twisted around a pin 121a and both sides are sewn together so that the webbing is secured around the pin. The pin is present in a horizontal opening in the table. The pin 121a may be, for example, a metal or wooden pin. The webbing may attach the air purifier directly or may attach a container 129 to the table. The webbing 121 may be, for example, a strap having a width between 3 and 8 cm, for example 6 cm. A snap buckle 121b (illustrated in FIG. 4) can be used to attach both ends of the webbing together and to tension the webbing. The invention is not limited thereto, however. Other systems for tensioning webbing can also be used.

Another example where the webbing is attached in a glass worktop is shown in FIG. 5. The drawing at the top left shows a cross-sectional view of a part of the worktop 110 containing the pin 121a. The opening in which the pin is mounted may have a width of about 8 cm and a height of about 3 cm, for example. A schematic drawing of the top view of this table is shown in the figure at the bottom right. In this example, the worktop is a round worktop with a diameter of 120 cm. The invention is not limited thereto and the worktop may have other shapes and dimensions. Centrally arranged in the worktop are 4 pins 121a for attaching the webbing. These must be able to bear a weight between 15 and 50 kg, for example. Depending on the application, lighter (e.g. between 15 and 20 kg) or heavier (e.g. between 20 and 50 kg or even heavier) weight pins can be used.

However, the air purifier may also be attached to the table in other ways (for example with screws or glues).

In some embodiments of the present invention, the table contains a container 129 which is attached to the worktop 110 and in which the air purifier 120 can be positioned. As previously discussed, the container may be attached to the table by means of a webbing.

The container 129 may be, for example, an inner bucket as illustrated in FIG. 2. In this example, the container is attached by means of metal profiles 128 that are attached to a collar in the opening 115. In this example, a lid 111 is present in the opening. This lid may be made of the same material as the worktop, for example. This lid can be used to cover the opening 115 when the air purifier is not in use.

The container 129 may be a chute with holes, wherein the holes allow air to be supplied to the air purifier. Various choices of material such as, for example, wood, chicken wire, perforated metal sheets, metal sheets with slots, air-permeable grids, woven rattan, or various other materials, are possible as materials for making the container.

The container may, for example, have a bottom on which the air purifier can be positioned. The height of the air purifier is adjustable in some embodiments of the present invention. In case the air purifier is positioned in the container, this can be achieved, for example, by changing the depth of the bottom of the container.

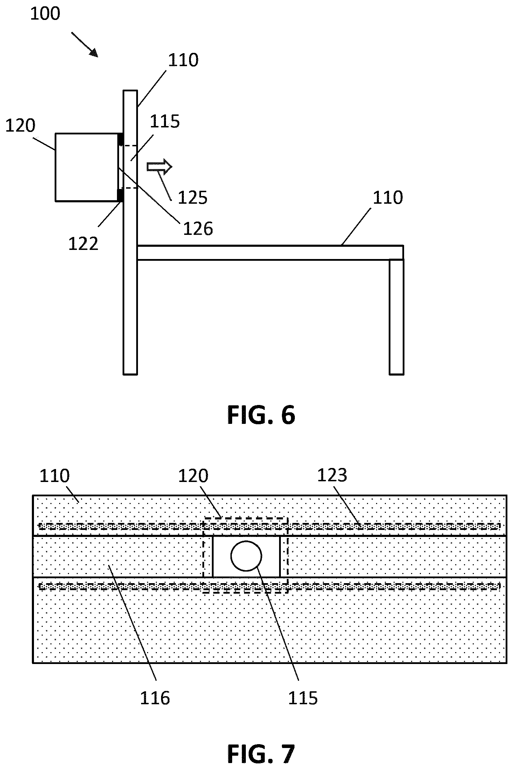

The worktop 110 may, in some embodiments of the present invention, have a vertically flat part containing the opening 115. An example of this is shown in FIG. 6. In this example, the worktop 110 has a horizontal and a vertical portion. The air purifier 120 is positioned on a first side of the vertical portion of the worktop and the outlet thereof connects with the worktop or protrudes through the opening of the worktop. The air purifier can, for example, be positioned in a container attached to the worktop. The air purifier is mounted such that when active, an airflow 125 flows from the first side to the second side through the opening 115. In this example, the airflow leaves the opening in the horizontal direction. Optionally, said airflow may be deflected. The airflow may be deflected in the horizontal plane, for example. However, the invention is not limited thereto. In this arrangement, too, the desired airflow can be determined according to the expected position of the persons at the worktop.

In some embodiments of the present invention, the air purifier 120 may be moved relative to the worktop 110. The movable module may be attached to a rail system, for example. FIG. 7 shows a schematic drawing of a top view of such an arrangement. An opening 115 is provided in the worktop 110. The outlet of an air purifier 120 connects with the opening 115. The air purifier 120 may be moved together with the opening in the worktop along rails 123. The openings in the worktop 110, via which the air purifier can move, are closed. Cover plates, lids, or roller systems 116, for example, may be used for this purpose. The rails 123 may be integrated into the worktop. The air purifier may be attached to the rails in various ways. This may be, for example, with metal tension straps. A table with a movable air purifier may be used, for example, as a kitchen table or as a meeting table.

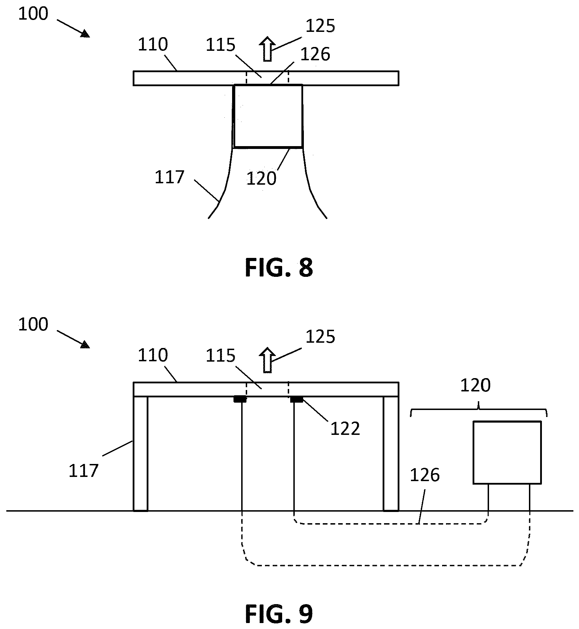

As previously indicated, a worktop 110 can be supported in various ways. In the example of FIG. 8, the worktop is supported by a central table leg 117. This table leg is designed to simultaneously support the air purifier 120.

In some embodiments of the present invention, the air purifier is supported by a frame and this frame is positioned such that the outlet of the air purifier 120 connects with the worktop 110 or protrudes through the opening of the worktop 110 such that the airflow from the air purifier flows from the first side to the second side. In some embodiments of the present invention, this frame may be attached on adjustable legs such that the outlet of the air purifier may be positioned so as to connect with the opening of the air purifier or so as to protrude from the opening.

In some embodiments of the present invention, the air purifier stands on the ground and the worktop is height-adjustable. This allows the height of the worktop to be adjusted such that the outlet of the air purifier connects with the worktop or protrudes through the opening of the worktop.

In embodiments of the present invention, the air purifier contains a filter system. The entire air purifier may be integrated into 1 module and attached to the worktop.

However, this is not strictly necessary. In some example not according to the invention, the outlet 126 of the air purifier 120 may also be a tube. An example of this is shown in FIG. 9.

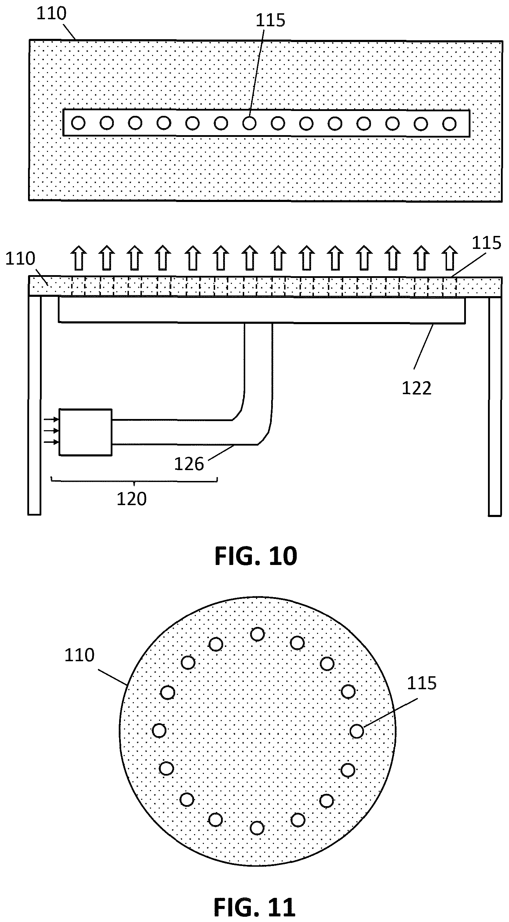

An example of a worktop having several openings is shown in FIG. 10. The top drawing shows a schematic representation of a top view of the worktop 110, and the bottom drawing shows a schematic representation of a side view. In this example, too, the outlet of the air purifier 120 is a tube 126. The outlet 126 connects with the worktop 110 by means of a sealing element 122 between the outlet 126 of the air purifier 120 and the worktop 110. In this case, the sealing element 122 contains a channel enclosing several openings 115. This channel allows the outgoing airflow from the air purifier to be distributed among the different openings. The invention is not limited to a channel for distributing the outgoing airflow among the different openings. Other configurations, such as various tubes or another distribution element that distributes the air among the different openings, are of course also possible. Another distribution element can for example be a slot, a textile cloth, metal slats, a metal or wooden grille with holes, etc.

The textile cloth may for example be spanned over a frame. Holes may be provided in the textile cloth. The filtered air flow can pass through these holes in the textile cloth.

FIG. 11 shows a top view of a similar worktop 110 to the worktop shown in FIG. 10. In this example, the worktop 110 is circular and the openings 115 are arranged in a circular configuration. Various other geometries are, of course, possible. The openings themselves do not have to be circular either.

The tube can be concealed or aesthetically camouflaged in various ways. For example, the tube can run partially under the floor surface (as illustrated in FIG. 9). It can also be integrated into a table leg, or hidden in a piece of furniture. The tube can also split into branches which lead to several openings in the same worktop or to openings of different worktops. Various arrangements are possible and the invention is not limited to the above examples.

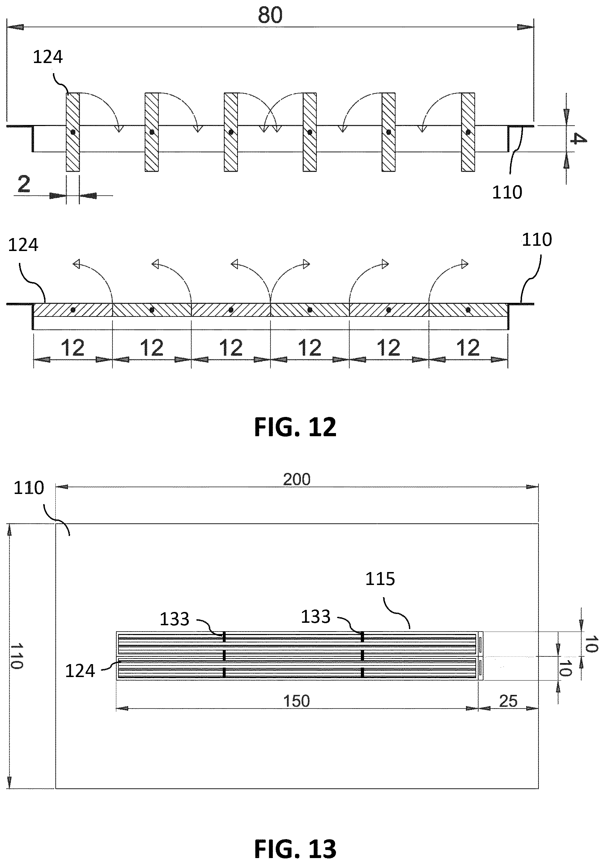

FIG. 12 illustrates a side section of a worktop 110 with an opening in the worktop wherein slats 124 are present in the opening which can be rotated in order to deviate the airflow. In the top view the slats form an angle of 90° with the worktop. Thus the air can freely pass through. In the bottom view the slats form an angle of 0° with the worktop. Thereby the opening in the worktop is closed. The arrows indicate possible rotations of the slats. The invention is, however, not limited thereto. The rotations can be in the opposite directions. The slats can also be positioned in other positions than 0° and 90°. This allows to orient the airflow in a preferred direction. The measures 80 (length of the opening), 2 (thickness of a slat), 4 (thickness of the worktop), and 12 (width of a slat) are expressed in centimetres. It is understood that the invention is not limited to these dimensions and that the opening and slats can also have different dimensions.

In this example the opening is rectangular and the slats are parallel with the longest side of the opening. In some embodiments slats may be oriented in different directions. There may, for example, be some of the slats which are oriented parallel with the shortest side of the rectangular opening. The slats may also be positioned in a fixed orientation such that they orient the airs stream towards the people around the table.

In some embodiments of the present invention the opening may be circular or elliptical. In that case the slats may also be circular, respectively elliptical, and positioned such that they orient the air stream towards the persons around the table.

FIG. 13 shows a top view of a worktop 110 wherein slats are provided which are oriented in the length direction of the opening. In the example the table has as dimensions 200x110 cm and the opening 115 is in the middle of the table and has as dimensions 150x20 cm. There are two groups of slats which each are 10 cm wide. These groups can be oriented separately. The opening in this example is 25 cm from the edge of the table. In this example some dimensions are given. The invention is, however, not limited thereto. The table and the opening may have different dimensions. The width of the opening may for example range between 4 and 20 cm. The length of the opening may for example depend on the length of the table and on the number of openings (also more than one opening may be present). In exemplary embodiments of the present invention the opening may be spaced 25 cm, or even 30 cm from the edge of the table.

In embodiments of the present invention the opening, or an ensemble of a plurality of openings, may be centred in the middle of the table. This is for example illustrated in FIG. 13. In order to have a stable air stream over the complete length of the opening a plurality of fans may be present. For example 3 fans, each with a flow rate of 750 m3/h may be present for the table of this example.

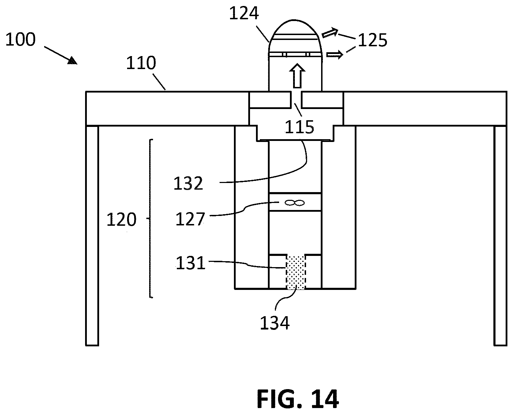

The fans 127 may be mounted as illustrated in FIG. 14. This figure shows a cross-section of a table 100, in accordance with embodiments of the present invention, and the cross-section is made orthogonal to the length direction of the table. Fans 127 can be mounted inside the air purifier and generate an airstream towards the opening 115 in the worktop 110. In this example only one fan 127 is visible. A plurality of fans may be provided which are distributed over the length of the table. A hollow space, also referred to as a plenum is present inside the air purifier 120. At the bottom side of the air purifier one or more holes 131 may be provided through which air can pass towards the fans 127. In these holes a filter 134, such as a HEPA filter, may be mounted. The plenum may be subdivided in separate hollow spaces by providing solid vertical plates 133 between the fans. These are represented by the vertical dashed lines in FIG. 13. In the air purifier 120 a textile clothing 132 is mounted between the fan(s) and the worktop. This textile clothing may for example be spanned over a frame. Holes may be provided in the textile cloth. They may for example be evenly distributed over the surface of the textile cloth. In embodiments of the present invention the textile cloth is designed such that the airstream is evenly distributed over the surface of the textile cloth. Instead of a textile cloth, also other elements (e.g. a metal grid) may be used for distributing the air stream over the surface of the element.

In or above the air opening 115 an air orienting element 124 may be mounted.

When mounted above the air opening, the air orienting element may be designed such that it can be put on top of the table over the air opening 115. It may for example be cube shaped, bar shaped, or dome shaped (e.g. a hemisphere). In the example of FIG. 14 the air orienting element is dome shaped. It may for example be made of plastic, resin, fibre reinforced resin, plexiglass, etc.

Openings, such as slots or holes, are present in the air orienting element which is mounted on top of the table. Openings may be provided such that the air can be directed in a direction ranging between 0° and 180° between the worktop and the airstream. Openings are provided such that the air can be directed in a direction ranging between 0° and 360° measured in a plane parallel with the worktop. The airstreams may be directed such that they are mainly oriented towards the breathing zone and less in a vertical upward direction. The slots may be oriented vertically or horizontally. Through these openings the air flow 125 can stream towards the persons at the table. Slats may be provided in the slots which allow to change the orientation of the air flow.

A dome shaped air orienting element 125 may be positioned such that it is rotatable around its symmetry axis. The openings may be provided such that by rotating the dome shaped air orienting element also the directions of the purified air streams change.

A groove may be provided in the table around the dome shaped air orienting element which allows to collect spilled liquids.

The air can be cleaned in various ways, for example by filtering (e.g. mechanical filtering or mechanical filtering in combination with ionisation), or by UV-C lighting. Other types of air purifiers can also be used. Various types of filters can be used such as, but not limited to, HEPA filters (e.g. H13, H14), biological filters, or PECO (photoelectrochemical oxidation) filters. Also combinations of filters may be used, such as for example HEPA filters combined with UVC light, or HEPA filters combined with ionisation, or other suitable combinations. PECO filters use the traditional principles of mechanical filters, not only to filter the pollutants, but also to destroy them chemically. In embodiments of the present invention the filters may be configured for filtering particles which have a diameter of 10 µm or larger, or even of 2.5 µm or larger.

In an air purifier that uses ionisation, the polluting particles in the airflow are electrically charged. These charged particles flow between electrically charged plates. This allows them to be diverted and captured.

In embodiments of the present invention, the air purifier 120 is suitable for removing viruses and/or bacteria from the air. However, the invention is not limited thereto and other air purifiers, e.g. for removing allergens, can also be used.

In this regard, it is an advantage that the concentration of viruses and bacteria in the air is reduced.

The air purifier may also be provided to cool and/or heat and/or humidify and/or otherwise treat the air.

In embodiments of the present invention, the air purifier draws air from the interior space. The air purifier thereby purifies the air of the space in which the air purifier is present.

The air purifier may also be configured such that it partly or completely draws air from the exterior.

In a second aspect, the present invention provides a kit of components adapted to purify ambient air once assembled. The kit of components comprises the features of claim 10.

The kit is configured such that when it is mounted as a table, it is configured for reducing the chance of contamination between persons at the table.

## Claims

1. A table (100) adapted to purify ambient air, the table (100) containing a worktop (110) containing an opening (115), and an air purifier (120), wherein an outlet (126) of the air purifier (120) connects with the worktop (110) or protrudes through the opening of the worktop (110) wherein the table is configured such that, during the operation of the air purifier, purified air flows through the opening (115) from a first side of the worktop (110) to a second side of the worktop (110), wherein the second side of the worktop is provided to be closer to the face of persons present than the first side and wherein the air purifier (120) is suitable for removing viruses and/or bacteria from the ambient air wherein the table comprises at least one air orienting element (124) for directing the purified air in different directions such that different air streams are obtained towards persons at the table and such that the air above the worktop (110) between the different persons at the table is continuously replaced by filtered air, wherein the table is configured for reducing the chance of airborne transmission between persons at the table, **characterized in that** openings are present in the air orienting element (124) such that the air can be directed in a direction ranging between 0° and 360° measured in a plane parallel with the worktop.

2. A table (100) according to claim 1, the table (100) containing a sealing element (122) between the outlet (126) of the air purifier (120) and the worktop (110) to provide the connection between the worktop (110) and the air purifier.

3. A table (100) according to one of claims 1 or 2, wherein, during the operation thereof, the outgoing airflow is oriented in a direction perpendicular to the worktop (110).

4. A table (100) according to one of claims 1 or 2, wherein, during the operation thereof, the outgoing airflow is oriented in a direction parallel to the worktop (110).

5. A table (100) according to one of the preceding claims, wherein the at least air orienting element (124) is adjustable such that the direction of the airflow can be varied.

6. A table (100) according to one of the preceding claims, wherein the table contains a webbing (121) with which the air purifier is attached to the worktop (110).

7. A table (100) according to one of claims 1 to 5, wherein the table contains a container (129) which is attached to the worktop (110) and in which the air purifier (120) can be positioned.

8. A table (100) according to one of the preceding claims, wherein the air purifier (120) is movably arranged with respect to the table (100).

9. A table (100) according to one of the preceding claims, wherein the outlet (126) of the air purifier (120) contains one or more tubes.

10. A kit of components adapted to purify ambient air once assembled, the kit of components comprising: a worktop (110) containing an opening (115), an air purifier (120), the outlet of which can be arranged so as to connect with the worktop (110), or can be arranged so as to protrude through the opening (115) of the worktop (110), wherein the kit is configured such that, during the operation of the air purifier, purified air flows through the opening (115) from a first side of the worktop (110) to a second side of the worktop (110), wherein the second side of the worktop is provided to be closer to the face of persons present than the first side and wherein the air purifier (120) is suitable for removing viruses and/or bacteria from the ambient air **characterised in that** the kit comprises at least one air orienting element (124) for directing the purified air in different directions such that, after mounting it as a table, during operation different air streams are obtained towards persons at the table and such that the air above the worktop (110) between the different persons at the table is continuously replaced by filtered air, wherein the table is configured for reducing the chance of contamination between persons at the table, **characterized in that** openings are present in the air orienting element (124) such that the air can be directed in a direction ranging between 0° and 360° measured in a plane parallel with the worktop.

## Patentansprüche

1. Ein Tisch (100), der angepasst ist, um Umgebungsluft zu reinigen, wobei der Tisch (100) eine Arbeitsplatte (110) enthält, die eine Öffnung (115) enthält und einen Luftreiniger (120), wobei ein Auslass (126) des Luftreinigers (120) mit der Arbeitsplatte (110) verbunden ist oder durch die Öffnung der Arbeitsplatte (110) hervorsteht, wobei der Tisch konfiguriert ist, sodass während des Betriebs des Luftreinigers gereinigte Luft durch die Öffnung (115) von einer ersten Seite der Arbeitsplatte (110) zu einer zweiten Seite der Arbeitsplatte (110) strömt, wobei die zweite Seite der Arbeitsplatte bereitgestellt ist, um näher am Gesicht anwesender Personen zu liegen als die erste Seite, und wobei der Luftreiniger (120) zum Entfernen von Viren und/oder Bakterien aus der Umgebungsluft geeignet ist, wobei
der Tisch mindestens ein Luftorientierungselement (124) zum Leiten der gereinigten Luft in verschiedene Richtungen umfasst, sodass unterschiedliche Luftströme in Richtung von Personen am Tisch erhalten werden und sodass die Luft über der Arbeitsplatte (110) zwischen den verschiedenen Personen am Tisch kontinuierlich durch gefilterte Luft ersetzt wird, wobei der Tisch zum Verringern der Wahrscheinlichkeit einer Übertragung durch die Luft zwischen den Personen am Tisch konfiguriert ist.
**dadurch gekennzeichnet, dass** Öffnungen im Luftorientierungselement (124) vorhanden sind, sodass die Luft in eine Richtung geleitet werden kann, die in einem Bereich zwischen 0° und 360°, in einer Ebene parallel zur Arbeitsplatte gemessen, liegt.

2. Ein Tisch (100) nach Anspruch 1, wobei der Tisch (100) ein Dichtungselement (122) zwischen dem Auslass (126) des Luftreinigers (120) und der Arbeitsplatte (110) enthält, um die Verbindung zwischen der Arbeitsplatte (110) und dem Luftreiniger bereitzustellen.

3. Ein Tisch (100) nach einem der Ansprüche 1 oder 2, wobei während des Betriebs davon der austretende Luftstrom in eine Richtung senkrecht zur Arbeitsplatte (110) ausgerichtet ist.

4. Ein Tisch (100) nach einem der Ansprüche 1 oder 2, wobei während des Betriebs davon der austretende Luftstrom in eine Richtung parallel zur Arbeitsplatte (110) ausgerichtet ist.

5. Ein Tisch (100) nach einem der vorstehenden Ansprüche, wobei das mindestens eine Luftorientierungselement (124) anpassbar ist, sodass die Richtung des Luftstroms variiert werden kann.

6. Ein Tisch (100) nach einem der vorstehenden Ansprüche, wobei der Tisch ein Gurtband (121) enthält, mit dem der Luftreiniger an der Arbeitsplatte (110) befestigt ist.

7. Ein Tisch (100) nach einem der Ansprüche 1 bis 5, wobei der Tisch einen Behälter (129) enthält, der an der Arbeitsplatte (110) befestigt ist und in dem der Luftreiniger (120) positioniert werden kann.

8. Ein Tisch (100) nach einem der vorstehenden Ansprüche, wobei der Luftreiniger (120) in Bezug auf den Tisch (100) beweglich angeordnet ist.

9. Ein Tisch (100) nach einem der vorstehenden Ansprüche, wobei der Auslass (126) des Luftreinigers (120) ein oder mehrere Rohre enthält.

10. Ein Bausatz aus Bauteilen, der angepasst ist, um, sobald er zusammengesetzt ist, Umgebungsluft zu reinigen, wobei der Bausatz aus Bauteilen umfasst: eine Arbeitsplatte (110), die eine Öffnung (115), einen Luftreiniger (120), dessen Auslass angeordnet werden kann, um mit der Arbeitsplatte (110) verbunden zu werden, oder angeordnet werden kann, um durch die Öffnung (115) der Arbeitsplatte (110) hervorzustehen, wobei der Bausatz konfiguriert ist, sodass während des Betriebs des Luftreinigers gereinigte Luft durch die Öffnung (115) von einer ersten Seite der Arbeitsplatte (110) zu einer zweiten Seite der Arbeitsplatte (110) strömt, wobei die zweite Seite der Arbeitsplatte näher am Gesicht anwesender Personen liegt ist als die erste Seite, und wobei der Luftreiniger (120) zum Entfernen von Viren und/oder Bakterien aus der Umgebungsluft geeignet ist, **dadurch gekennzeichnet, dass** der Bausatz mindestens ein Luftorientierungselement (124) zum Leiten der gereinigten Luft in verschiedene Richtungen umfasst, sodass nach dessen Montage als Tisch während des Betriebs unterschiedliche Luftströme in Richtung der Personen am Tisch erhalten werden und sodass die Luft über der Arbeitsplatte (110) zwischen den verschiedenen Personen am Tisch kontinuierlich durch gefilterte Luft ersetzt wird, wobei der Tisch zum Verringern der Wahrscheinlichkeit einer Kontamination zwischen den Personen am Tisch konfiguriert ist, **dadurch gekennzeichnet, dass** Öffnungen im Luftorientierungselement (124) vorhanden sind, sodass die Luft in eine Richtung geleitet werden kann, die in einem Bereich zwischen 0° und 360°, in einer Ebene parallel zur Arbeitsplatte gemessen, liegt.

## Revendications

1. Une table (100) adaptée pour purifier l'air ambiant, ladite table (100) contenant un plateau de travail (110) contenant une ouverture (115), et un purificateur d'air (120), dans lequel une sortie (126) dudit purificateur d'air (120) se connecte avec le plateau de travail (110) ou dépasse à travers l'ouverture du plateau de travail (110), dans lequel ladite table est configurée de telle sorte que, pendant le fonctionnement dudit purificateur d'air, l'air purifié s'écoule à travers l'ouverture (115) d'un premier côté du plateau de travail (110) vers un second côté du plateau de travail (110), dans lequel le second côté du plateau de travail est prévu pour être plus proche du visage des personnes présentes que le premier côté et dans lequel ledit purificateur d'air (120) est adapté pour éliminer les virus et/ou les bactéries de l'air ambiant, dans lequel ladite table comprend au moins un élément d'orientation de l'air (124) pour diriger l'air purifié dans différentes directions de sorte que différents flux d'air soient obtenus vers les personnes à la table et de sorte que l'air au-dessus du plateau de travail (110) entre les différentes personnes à la table soit continuellement remplacé par de l'air filtré, dans lequel ladite table est configurée pour réduire la probabilité de transmission aéroportée entre les personnes à la table, **caractérisée en ce que** des ouvertures sont présentes dans ledit élément d'orientation de l'air (124) de sorte que l'air puisse être dirigé dans une direction allant de 0° à 360° mesurée dans un plan parallèle au plateau de travail.

2. Une table (100) selon la revendication 1, ladite table (100) contenant un élément d'étanchéité (122) entre la sortie (126) dudit purificateur d'air (120) et le plateau de travail (110) pour assurer la connexion entre le plateau de travail (110) et le purificateur d'air.

3. Une table (100) selon l'une des revendications 1 ou 2, dans laquelle, pendant le fonctionnement de celle-ci, le flux d'air sortant est orienté dans une direction perpendiculaire au plateau de travail (110).

4. Une table (100) selon l'une des revendications 1 ou 2, dans laquelle, pendant le fonctionnement de celle-ci, le flux d'air sortant est orienté dans une direction parallèle au plateau de travail (110).

5. Une table (100) selon l'une des revendications précédentes, dans laquelle ledit au moins un élément d'orientation de l'air (124) est ajustable de sorte que la direction du flux d'air puisse être variée.

6. Une table (100) selon l'une des revendications précédentes, dans laquelle ladite table contient une sangle (121) avec laquelle le purificateur d'air est attaché au plateau de travail (110).

7. Une table (100) selon l'une des revendications 1 à 5, dans laquelle ladite table contient un conteneur (129) qui est attaché au plateau de travail (110) et dans lequel le purificateur d'air (120) peut être positionné.

8. Une table (100) selon l'une des revendications précédentes, dans laquelle ledit purificateur d'air (120) est disposé de manière mobile par rapport à ladite table (100).

9. Une table (100) selon l'une des revendications précédentes, dans laquelle la sortie (126) dudit purificateur d'air (120) contient un ou plusieurs tubes.

10. Un kit de composants adapté pour purifier l'air ambiant une fois assemblé, ledit kit de composants comprenant : un plateau de travail (110) contenant une ouverture (115), un purificateur d'air (120), dont la sortie peut être agencée de manière à se connecter avec le plateau de travail (110), ou peut être agencée de manière à dépasser à travers l'ouverture (115) du plateau de travail (110), dans lequel ledit kit est configuré de telle sorte que, pendant le fonctionnement dudit purificateur d'air, l'air purifié s'écoule à travers l'ouverture (115) d'un premier côté du plateau de travail (110) vers un second côté du plateau de travail (110), dans lequel le second côté du plateau de travail est prévu pour être plus proche du visage des personnes présentes que le premier côté et dans lequel ledit purificateur d'air (120) est adapté pour éliminer les virus et/ou les bactéries de l'air ambiant, **caractérisé en ce que** ledit kit comprend au moins un élément d'orientation de l'air (124) pour diriger l'air purifié dans différentes directions de sorte que, après montage en tant que table, pendant le fonctionnement, différents flux d'air soient obtenus vers les personnes à la table et de sorte que l'air au-dessus du plateau de travail (110) entre les différentes personnes à la table soit continuellement remplacé par de l'air filtré, dans lequel ladite table est configurée pour réduire la probabilité de contamination entre les personnes à la table, **caractérisé en ce que** des ouvertures sont présentes dans ledit élément d'orientation de l'air (124) de sorte que l'air puisse être dirigé dans une direction allant de 0° à 360° mesurée dans un plan parallèle au plateau de travail.
